# EUROPEAN PATENT SPECIFICATION

(11) **EP 2 867 664 B1**
(45) Date of publication and mention of the grant of the patent: **20.10.2021**
(21) Application number: 13744858.5
(22) Date of filing: 28.06.2013
(51) Int. Cl.: G01N 29/04, G01N 29/34, G01N 29/42

(54) **METHOD AND APPARATUS FOR ACOUSTIC ASSESSMENT OF FLUID CONDUITS**
VERFAHREN UND VORRICHTUNG ZUR AKUSTISCHEN BEWERTUNG VON FLUIDROHRLEITUNGEN
PROCÉDÉ ET DISPOSITIF POUR L'ÉVALUATION ACOUSTIQUE DES CONDUITES DE FLUIDES

(30) Priority: 28.06.2012 GB 201211515
(43) Date of publication of application: 06.05.2015
(73) Proprietor: Pipelines 2 Data (P2D) Limited, Aberdeen, Aberdeenshire AB12 3SN (GB); Hydrason Solutions Limited, Glasgow, Strathclyde G2 5RZ (GB)
(72) Inventor: Mayo, Steve, Aberdeen, Aberdeenshire AB11 6UJ (GB); Money, Nigel, Aberdeen, Aberdeenshire AB15 6EA (GB); Capus, Chris, Glasgow, Strathclyde G2 5RZ (GB); Pailhas, Yan, Glasgow, Strathclyde G2 5RZ (GB)
(74) Representative: Lincoln IP
(86) International application number: PCT/US2013/048785
(87) International publication number: WO 2014/005126

(56) References cited:
- WO-A1-2010/107712
- US-A- 4 539 847
- US-A- 6 076 407
- US-A1- 2007 019 506
- US-A1- 2009 078 049
- US-B1- 7 246 522

## Description

The present invention relates to methods and apparatus for the acoustic assessment of fluid conduits or their features, particularly but not exclusively to methods and apparatus assessing the condition of features of surface, subsea or subterranean pipelines, risers including marine and/or flexible risers, tubing including subterranean well tubing, and other fluid conduits used in the hydrocarbon exploration, production and transportation industries.

Aspects of the invention are methods and apparatus which use acoustic techniques for the assessment and monitoring of the internal condition of fluid conduits, including the build-up and deposition of scale, sand, waxes and other materials on the interior surface of conduits. Alternative aspects of the invention are methods and apparatus which use acoustic techniques for the assessment, monitoring and inspection of the physical condition of a fluid conduit including defects, wall thickness, damage, holes, cracks and corrosion of a conduit or its layers.

### Background to the invention

Ultrasound transducers have been used in pipeline pigging applications to measure or map the profile of the inner diameter of a pipeline using single frequency pulses.

Wideband acoustic measurement techniques, which may be referred to as bio-sonar acoustic measurement techniques have been used in applications to detect and/or characterise buried objects. Examples are described in Y. Pailhas et al. (2010) (reference [1]) and P. Moore et al. (reference [2]).

WO 2007/123418 describes an acoustic method and apparatus for detecting a hydrate presence in a hydrocarbon pipeline. The technique relies on acoustic resonance frequencies of the pipeline walls, which imposes limitations on the application of the method to the detection or assessment of a wide range of fluid conduit conditions and on the manner in which the apparatus can be deployed.

US 4,539,847 discloses a system for measuring the thickness of a coating layer on a substrate. US 2009/078049 discloses an apparatus and method for non-contact feature detection using ultrasonic lamb waves.

US 7,246,522 discloses an apparatus for the non-intrusive inspection of a container and its contents which uses acoustic excitation pulses or waveforms transmitted from its exterior. WO 2010/107712 describes a method for inspecting the wall of a mechanical structure from its exterior using ultrasonic waves.

US 2007/0019506 relates to a system for ultrasonic imaging of wellbores which uses wideband acoustic pulses and wavelets with a characteristic frequency approximately equal to a selected impedance measurement frequency.

It is amongst the aims and objects of the invention to provide a method of assessing a fluid conduit condition which is improved with respect to prior art methods and apparatus for acoustic detection. It is another aim of invention to apply bio-inspired acoustic pulses to the assessment of fluid conduit conditions. Further aims and objects of the invention will become apparent from the following description.

### Summary of the invention

According to a first aspect of the invention there is provided a method of assessing a condition of a fluid conduit, the method comprising:
providing a measurement apparatus comprising at least one wideband acoustic transducer internally of the fluid conduit;
transmitting a wideband acoustic signal comprising a plurality of stacked frequency chirps from the measurement apparatus to excite at least a portion of the fluid conduit;
wherein the wideband acoustic signal comprises a first chirp having a first frequency range, and a second chirp having a second frequency range, higher than the first frequency range;
and wherein the first and second chirps overlap in time for greater than 50% of the duration of the first chirp;
receiving a wideband acoustic signal in the measurement apparatus to obtain a wideband acoustic data set; and
analysing the wideband acoustic data set by comparing the wideband acoustic data set with a database of wideband acoustic data signatures to assess the condition of the fluid conduit;
wherein the wideband acoustic signal comprises frequencies in the range of 10 kHz to 150 kHz.

In the context of the description, the term "assessing the condition of a fluid conduit" is used to generally to refer to the overall state of the flow path defined by fluid conduit (primarily the effective flow area of the conduit), including one or more features of its internal condition which may be affected for example by build-up and deposition of scale, sand, waxes and other materials on the interior surface, and its inherent physical condition which may include the presence of defects, damage, holes, cracks, wall thickness and corrosion of the conduit or a part thereof.

The wideband acoustic signal may comprise a lower frequency of 10 kHz, and an upper frequency of 150 kHz, and may comprise a distribution of frequencies between the upper and lower frequencies.

Preferably, the method comprises transmitting a wideband acoustic signal from the measurement apparatus, through a fluid which couples the measurement apparatus to at least a portion of the fluid conduit. The method may therefore be a non-contact method, in which a transmission transducer does not physically contact the fluid conduit directly.

The measurement apparatus may comprise a transmission wideband acoustic transducer and a receiving wideband acoustic transducer. Alternatively, the wideband acoustic signal may be transmitted and received from a single wideband acoustic transducer.

Preferably, the measurement apparatus comprises a plurality of acoustic transducers, and most preferably comprises a plurality of pairs of transmitting/receiving wideband acoustic transducers.

Preferably, the wideband acoustic transducer comprises a composite transducer. The wideband acoustic transducer preferably has a low Q-factor, and may have a Q-factor of less than 5.0. In particular embodiments the Q-factor is less than 2.0 and more preferably is less than 1.5.

The wideband acoustic transducer is preferably selected to have a high transmit and/or receive sensitivity. Preferably, the efficiency of the wideband acoustic transducer is greater than 50%, and more preferably is greater than 65%.

Preferred embodiments of the invention use a plurality of wideband acoustic transducers with similar, substantially identical, or identical specifications as defined above.

The transmitted wideband acoustic signal may therefore comprise a complex-stacked chirped signal.

The frequency chirps may comprise down chirps. Alternatively or in addition the frequency chirps may comprise up chirps.

The second frequency range is preferably different from the first frequency range, and may be for example slightly higher than the first frequency range.

Preferably the first and second chirps overlap for greater than 70% of the duration of the first chirp, and may overlap for greater than 80% of the duration of the first chirp. The first and second chirps may overlap for around 90% of the duration of the first chirp.

The method may comprise using beam forming transmission and/or reception techniques. The method may comprise transmitting and/or receiving using high directivity index beams, and may comprise using main beam widths of less than 10 degrees.

Preferably, the method comprises analysing the frequency content of the wideband acoustic data set. The method may comprise comparing the frequency content of the wideband acoustic data set with the frequency content of previously acquired acoustic data.

Preferably, analysing the wideband acoustic data set is performed in a computer apparatus executing a computer program. Preferably a computer program comprises software algorithms for the analysis for wideband acoustic signals. The method may comprise of interrogating a database of wideband acoustic data. The wideband acoustic data may be data collected from one or more tests performed on a fluid conduit of known condition.

The method may comprise assessing or detecting the presence of a layer or volume of material in the fluid conduit. The layer or volume of material may be a layer or deposit of material on the inner wall or surface of the fluid conduit. The layer or deposit of material may comprise the build-up and/or deposition of scale, sand, waxes, hydrates, or other solids.

Alternatively, or in addition, the layer or volume of material may be volume of fluid in the fluid conduit. The layer or volume of fluid may be between two layers of a multi-layer fluid conduit, for example in an annulus between adjacent layers. The fluid conduit may be a flexible conduit, for example a flexible riser, and the method may comprise assessing or detecting the presence of a volume of fluid in between different layers in the flexible riser. The method may therefore comprise a method of determining or inspecting the condition of a flexible riser.

The method may comprise analysing the wideband acoustic data set to assess one or more acoustic properties or attributes of the layer or volume of material.

The method may comprise assessing a physical condition of the fluid conduit. The physical condition may comprise the presence of one or defects, damage, holes, cracks, wall thickness and/or corrosion of a conduit or its layers.

The method may comprise analysing the wideband acoustic data set to assess one or more acoustic properties or attributes a physical condition of the fluid conduit.

The fluid conduit may be selected from the group consisting of: surface, subsea or subterranean pipelines, risers including marine and/or flexible risers, tubing including subterranean well tubing.

The fluid conduit may be selected a fluid conduit used in the hydrocarbon exploration, production and transportation industries.

There may be provided a method of assessing a condition of a pipeline, not according to the present invention, comprising:
providing a measurement apparatus comprising a wideband acoustic transducer; transmitting a wideband acoustic signal from the measurement apparatus to excite at least a portion of the fluid conduit;
receiving a wideband acoustic signal in the measurement apparatus to obtain a wideband acoustic data set;
analysing the wideband acoustic data set to detect or assess a layer or deposit on the interior of the fluid conduit.

The wideband acoustic signal may comprise a lower frequency of 10 kHz, and an upper frequency of 150 kHz, and may comprise a distribution of frequencies between the upper and lower frequencies.

There may be provided a method of assessing a condition of a flexible riser, not according to the present invention, comprising:
providing a measurement apparatus comprising a wideband acoustic transducer;
transmitting a wideband acoustic signal from the measurement apparatus to excite at least a portion of the fluid conduit;
receiving a wideband acoustic signal in the measurement apparatus to obtain a wideband acoustic data set;
analysing the wideband acoustic data set to detect or assess a volume of material in an annulus between layers of the flexible riser.

The wideband acoustic signal preferably comprises frequencies in the range of approximately 10 kHz to approximately 150 kHz.

The wideband acoustic signal may comprise a lower frequency of approximately 10 kHz, and an upper frequency of approximately 150 kHz, and may comprise a distribution of frequencies between the upper and lower frequencies.

According to a second aspect of the invention there is provided a measurement system for assessing a condition of a fluid conduit, the system comprising:
a body and at least one wideband acoustic transducer disposed on the body;
wherein the at least one wideband acoustic transducer is configured to:
   transmit a wideband acoustic signal comprising a plurality of stacked frequency chirps into a fluid volume coupled to the at least a portion of the fluid conduit to excite at least a portion of the fluid conduit; wherein the wideband acoustic signal comprises a first chirp having a first frequency range, and a second chirp having a second frequency range,
   higher than the first frequency range;
   and wherein the first and second chirps overlap in time for greater than 50% of the duration of the first chirp;
   wherein the at least one wideband acoustic transducer is configured to receive a wideband acoustic signal to obtain a wideband acoustic data set;
   the system comprises a computer configured to compare the wideband acoustic data set with a database of wideband acoustic data signatures;
   wherein the body is configured to be disposed internally of the fluid conduit;
   and the at least one wideband acoustic transducer is configured to transmit a wideband acoustic signal comprising frequencies in the range of 10 kHz to 150 kHz

The measurement apparatus may comprise a transmission wideband acoustic transducer and a receiving wideband acoustic transducer. Alternatively, the wideband acoustic signal may be transmitted and received from a single wideband acoustic transducer.

Preferably, the measurement apparatus comprises a plurality of acoustic transducers, and preferably comprises a plurality of pairs of transmitting/receiving wideband acoustic transducers.

Preferably, the wideband acoustic transducer comprises a composite transducer. The wideband acoustic transducer preferably has a low Q-factor, and mayhave a Q-factor of less than 5.0. In particular embodiments the Q-factor is less than 2.0 and more preferably is less than 1.5.

The wideband acoustic transducer is preferably selected to have a high transmit and/or receive sensitivity. Preferably, the efficiency of the wideband acoustic transducer is greater than 50%, and more preferably is greater than 65%.

Preferred embodiments of the invention use a plurality of wideband acoustic transducers with similar, substantially identical, or identical specifications as defined above.

Preferably, the transducer is selected to provide a substantially linear or linear acoustic response.

Embodiments of the second aspect of the invention may include one or more features of the first aspect of the invention or its embodiments, or vice versa.

There may be provided a method of acquiring data, not according to the present invention, using an apparatus according to the second aspect of the invention.

There may be provided a method of assessing a condition of a fluid conduit, not according to the present invention, comprising:
providing a measurement apparatus comprising a wideband acoustic transducer;
transmitting a wideband acoustic signal from the measurement apparatus to excite at least a portion of the fluid conduit;
receiving a wideband acoustic signal in the measurement apparatus to obtain a wideband acoustic data set;
analysing the wideband acoustic data set to assess the condition of the fluid conduit.

Preferably, the method comprises transmitting a wideband acoustic signal with a frequency range between approximately 100 kHz and 2.5 MHz.

Where there may be increased signal attenuation, the method comprises transmitting a wideband acoustic signal with a lower frequency range, e.g. between approximately 25 kHz and 1 MHz.

There may be provided a measurement apparatus for assessing a condition of a fluid conduit, not according to the present invention, the apparatus comprising:
a body and at least one wideband acoustic transducer disposed on the body;
wherein the apparatus is operable to:
   transmit a wideband acoustic signal from the at least one transducer into a fluid volume coupled to the at least a portion of the fluid conduit;
   receive a wideband acoustic signal at the at least one wideband acoustic transducer to obtain a wideband acoustic data set.

### Brief description of the drawings

There will now be described, by way of example only, various embodiments of the invention with reference to the drawings, of which:
Figure 1 is a schematic representation of an internal fluid conduit measurement apparatus according to a first embodiment of the invention;
Figure 2 is a schematic representation of an external fluid conduit measurement apparatus which is not according to the invention and is present for illustration purposes only;
Figure 3 is a plot of a bio-inspired wideband acoustic signal, as may be used in preferred embodiments of the invention; and
Figures 4A to 6B are plots of bio-inspired wideband acoustic pulses, as may be used in preferred embodiments of the invention.

### Detailed description of preferred embodiments

There will now be described, by way of example only, various embodiments of the invention with reference to the drawings, of which:

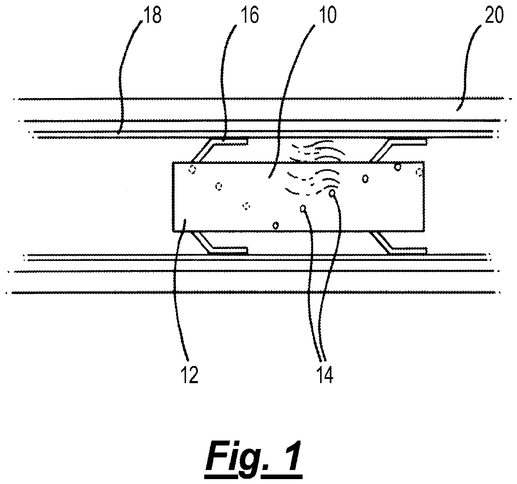

Figure 1 shows schematically an apparatus 10 according to a first embodiment of the invention which is used to perform an assessment method on a fluid conduit, in this case a hydrocarbon pipeline 20.

The apparatus 10 is configured to be operated inside the pipeline (and is effectively a pipeline pig). The apparatus comprises a body 12 on which are located a plurality of wideband acoustic transducers 14. The transducers are arranged in a helical path on the body. The body is centralised in the pipeline by contact arms 16, which may be measurement callipers. In use, a transmitting transducer 14 transmits a wideband acoustic signal, which may comprise one or more chirps (which may be stacked). The signal is coupled to the pipeline via fluid or slurry contained in the pipeline to excite the pipeline.

In this example, the wideband acoustic signal comprises a lower frequency of approximately 10 kHz, and an upper frequency of approximately 150 kHz, and may comprise a distribution of frequencies between the upper and lower frequencies. In other instances, the signal has a frequency range between about 100 kHz and 2.5 MHz. However if increased attenuation is experienced (or expected) a lower frequency range may be employed, e.g. between about 25 kHz and 1 MHz.

The chirps in the signal may have different frequency ranges, selected to overlap to varying degrees (e.g. 50%, 70%, 80%, or 90% in a particular instance).

A second transducer receives a return signal from the excited pipeline, and a return data set is collected and stored in internal memory in the apparatus. The return signal is affected by the acoustic properties experienced between transmission and detection, including acoustic properties of the pipeline and a layer 18 deposited on the inside of the pipeline. Analysing the return data set enables the presence of a layer or deposit to be detected by the apparatus. Furthermore, by comparison with acoustic signatures collected from layers or deposits of known thickness, profile and/or composition enables a detected layer or deposit to be characterised. The method therefore enables characteristics of the layer or deposit to be inferred from the detected acoustic wideband signal.

Such analysis can be performed using software algorithms, and the acoustic signatures may be stored as a data set within a database. The frequency content of the return signal can also be analysed, and may be compared with the frequency content of such signature acoustic data sets.

The apparatus 10 may also be used for the detection of defects, damage, holes, cracks, wall thickness and corrosion of the pipeline. Comparison of the received signal with acoustic signatures collected from pipelines with defects, damage, holes, cracks, wall thickness and corrosion enables a detected feature to be characterised.

The analysis may also identify the volume of fluid in the fluid conduit.

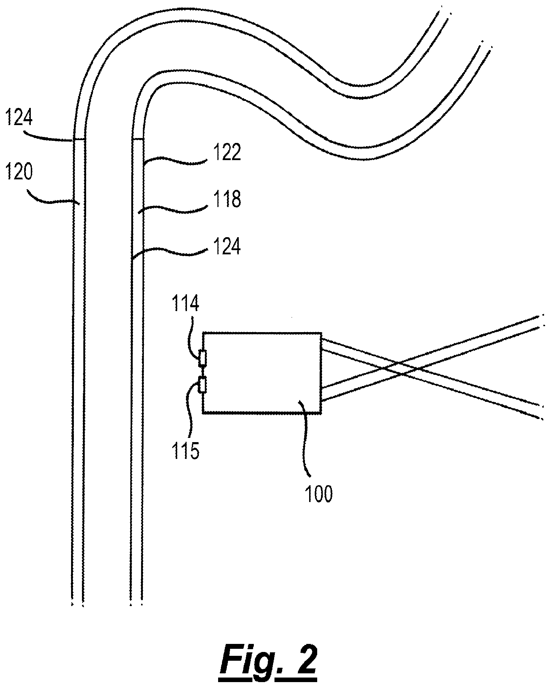

Figure 2 shows schematically an apparatus 100 which is not according to the invention and is present for illustration purposes only, It is used to perform an assessment method on a multiple layer fluid conduit, in this case a flexible riser 120.

The apparatus 100 is configured to be operated external to the riser (i.e. in a subsea location). The apparatus comprises a body on which are located a pair of wideband acoustic transducers 114, 115. The apparatus is deployed by an ROV (not shown). In use, a transmitting transducer 114 transmits a wideband acoustic signal, which may comprise one or more chirps. The signal is coupled to the flexible riser by the water column to excite the pipeline.

A second transducer 115 receives a return signal from the excited flexible riser, and a return data set is collected and stored in internal memory in the apparatus or transmitted to a remote location. The return signal is affected by the acoustic properties experienced between transmission and detection, including acoustic properties of the flexible riser and the volume 118 between the outer layer 122 of the riser and an internal layer 124. Analysing the return data set enables the presence of fluid to be detected by the apparatus. The apparatus may therefore be used to identify damage to the flexible riser, indicated by the presence of a flooded annulus. In this case, the flexible riser has a flooded annulus 118 due to water ingress through damaged portions of the flexible riser, with the level of flooding up to the water level 124.

The apparatus 100 may also be used for the detection of defects, damage, holes, cracks, wall thickness and corrosion of the flexible riser. Comparison of the received signal with acoustic signatures collected from pipelines with defects, damage, holes, cracks, wall thickness and corrosion enables a detected feature to be characterised.

In the above examples, a first transducer transmits the wideband acoustic signal, and a second transducer receives the return signal. In practice, it is advantageous if a number of pairs of such transducers are employed. However, it is also envisaged that a wideband acoustic signal may be transmitted and received by the same transducer, or that a number of such dual-purpose transducers may be employed.

The transducers may be composite transducers, may have low Q-factors, e.g. less than 5 (or less than 2, or less than 1.5), and/or may have a high sensitivity, e.g. greater than 50% (or greater than 65%). In practice, a combination of composite and non-composite transducers, transducers of varying Q-factors, and transducers of varying sensitivities, may be employed.

Beam forming techniques can be used in the transmission and/or reception of acoustic signals, and directional (e.g. beam widths of less than 10 degrees) index beams may be employed.

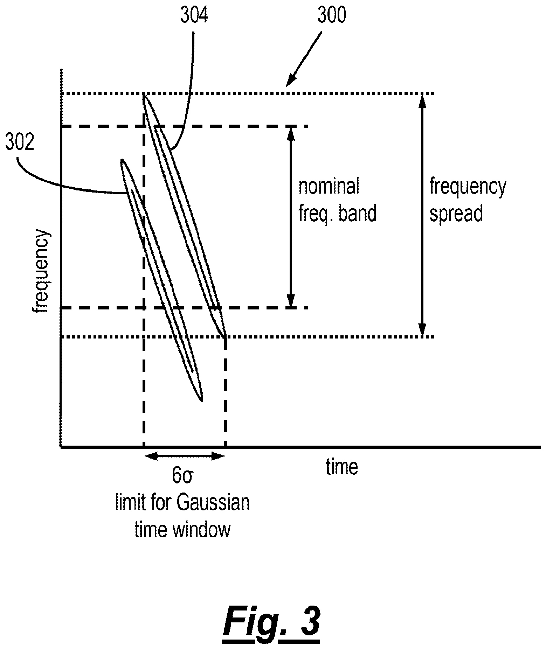

Figure 3 is a graphical diagram 300 showing an example of the design of a bio-inspired wideband acoustic signal, as may be used in preferred embodiments of the invention. The graph 300 plots frequency against time. The signal comprises a pair of overlapping down chirps 302, 304, which overlap in time to generate the acoustic excitation pulse.

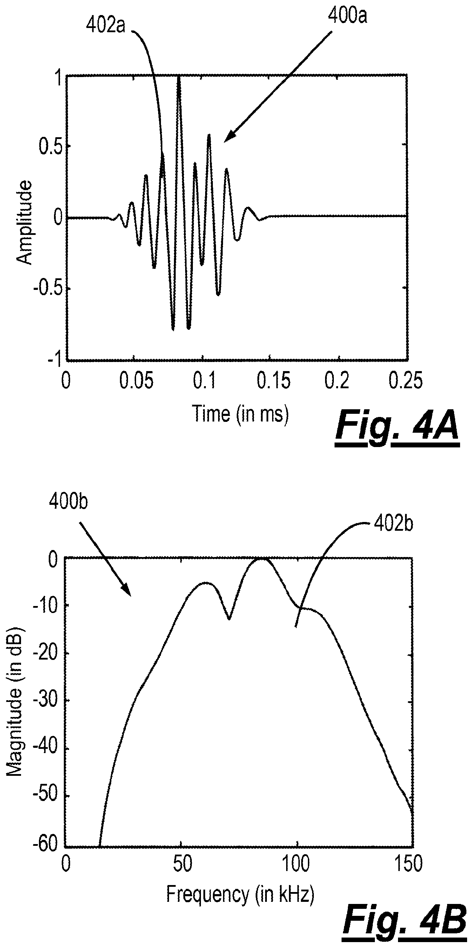

Figures 4A to 6B are examples of plots of bio-inspired wideband acoustic pulses, as may be used in preferred embodiments of the invention. In each case, the first plot in each drawing (suffixed "A") shows the pulse in the time domain, and the second plot (suffixed "B") shows the pulse in the frequency domain.

In Figures 4A and 4B, the plots 400a, 400b, show a wideband acoustic signal 402a, 402b with a frequency range of approximately 15 kHz to about 150kHz, and a distribution of frequencies across that range.

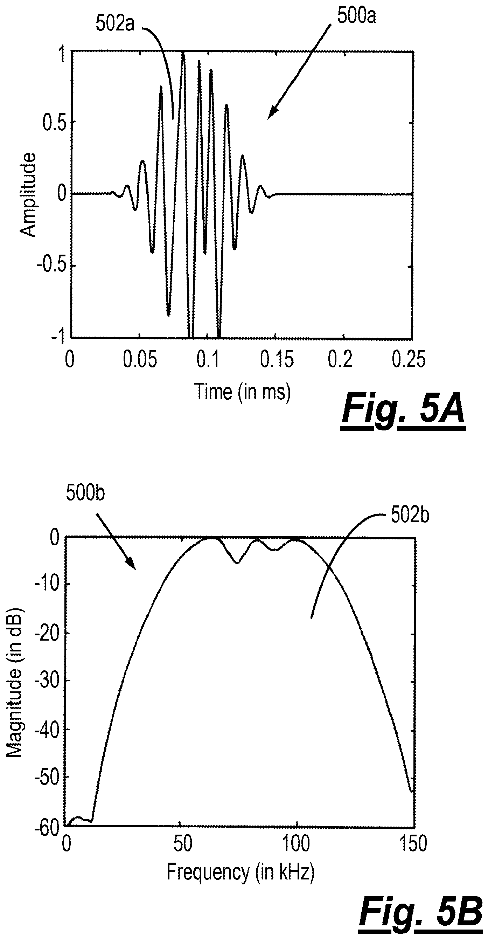

In Figures 5A and 5B, the plots 500a, 500b, show a wideband acoustic signal 502a, 502b with a frequency range of approximately 12 kHz to about 150kHz, and a distribution of frequencies across that range.

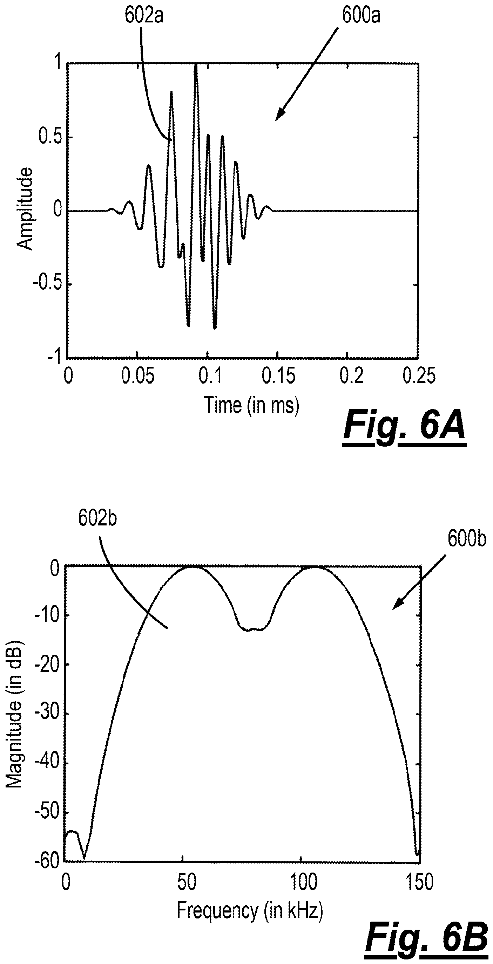

In Figures 6A and 6B, the plots 600a, 600b, show a wideband acoustic signal 602a, 602b with a frequency range of approximately 10 kHz to about 150kHz, and a distribution of frequencies across that range.

The design of wideband acoustic signals in accordance with Figures 3 to 6B (i.e. with a frequency range of approximately 10 kHz to about 150kHz, overcomes limitations of the technique of WO2007/123418, which is reliant on resonant frequencies of pipeline walls. The selection of frequencies in the range of 10 kHz to about 150 kHz facilitates a range of applications to fluid conduit assessment or inspection.

The invention provides a method of assessing a condition of a fluid conduit. The method comprises providing a measurement apparatus comprising at least one wideband acoustic transducer internally of a fluid conduit, and transmitting a wideband acoustic signal comprising a plurality of stacked frequency chirps from the measurement apparatus to excite at least a portion of the fluid conduit. The wideband acoustic signal comprises a first chirp having a first frequency range, and a second chirp having a second frequency range, higher than the first frequency range. The first and second chirps overlap in time for greater than 50% of the duration of the first chirp. The method comprises receiving a wideband acoustic signal in the measurement apparatus to obtain a wideband acoustic data set. The method comprises analysing the wideband acoustic data set by comparing the wideband acoustic data set with a database of wideband acoustic data signatures to assess the condition of the fluid conduit. The wideband acoustic signal comprises frequencies in the range of approximately 10 kHz to approximately 150 kHz. Applications include detecting or assessing a layer or deposit on an interior of the fluid conduit and assessing a physical condition of the fluid conduit. Water ingress into an annulus of a multiple layer conduit (such as a flexible riser) may be detected.

Various modifications may be made within the scope of the invention as herein intended, and embodiments of the invention may include combinations of features other than those expressly described above. For example, where the apparatus is described above as performing an assessment method on a hydrocarbon pipeline and on a flexible riser, it will be appreciated that the apparatus (and the assessment method) is equally applicable to other fluid conduits including surface, subsea or subterranean pipelines, risers including marine and/or flexible risers, and tubing including subterranean well tubing.

### References

[1] Y. Pailhas, C. Capus, K. Brown, and P. Moore, "Analysis and classification of broadband echoes using bio inspired dolphin pulses," J. Acoust. Soc. Am., vol. 127, no. 6, pp. 3809-3820, 2010.
[2] P. Moore, H. Roitblat, R. Penner, and P. Nachtigall. Recognizing successive dolphin echoes with an integrator gateway network. Neural Networks, 4:701-709, 1991.
[3] WO2007/123418

## Claims

1. A method of assessing a condition of a fluid conduit (20), the method comprising:
providing a measurement apparatus (10) comprising at least one wideband acoustic transducer (14) internally of the fluid conduit (20);
transmitting a wideband acoustic signal comprising a plurality of stacked frequency chirps from the measurement apparatus (10) to excite at least a portion of the fluid conduit (20); wherein the wideband acoustic signal comprises a first chirp having a first frequency range, and a second chirp having a second frequency range, higher than the first frequency range;
and wherein the first and second chirps overlap in time for greater than 50% of the duration of the first chirp;
receiving a wideband acoustic signal in the measurement apparatus (10) to obtain a wideband acoustic data set; and
analysing the wideband acoustic data set by comparing the wideband acoustic data set with a database of wideband acoustic data signatures to assess the condition of the fluid conduit (20);
wherein the wideband acoustic signal comprises frequencies in the range of 10 kHz to 150 kHz.

2. The method according to claim 1, wherein the wideband acoustic signal comprises a lower frequency of 10 kHz, and an upper frequency of 150 kHz, and distribution of frequencies between the upper and lower frequencies.

3. The method according to claim 1 or claim 2, comprising detecting or assessing a layer or deposit (18) on an interior of the fluid conduit.

4. The method according to any preceding claim wherein the measurement apparatus (10) comprises a pipeline pig.

5. The method according to any preceding claim, wherein the fluid conduit is a subterranean pipeline.

6. The method according any preceding claim, wherein the method comprises transmitting a wideband acoustic signal from the measurement apparatus (10), through a fluid which couples the measurement apparatus to at least a portion of the fluid conduit (20), wherein at least one wideband acoustic transducer (14) does not directly physically contact the fluid conduit.

7. The method according to any preceding claim, comprising analysing the wideband acoustic data set by analysing the frequency content of the wideband acoustic data set and comparing the data set with a database of wideband acoustic data signatures.

8. A measurement system (10) for assessing a condition of a fluid conduit (20), the system comprising:
a body (12) and at least one wideband acoustic transducer (14) disposed on the body;
wherein the at least one wideband acoustic transducer is configured to:
transmit a wideband acoustic signal comprising a plurality of stacked frequency chirps into a fluid volume coupled to the at least a portion of the fluid conduit to excite at least a portion of the fluid conduit; wherein the wideband acoustic signal comprises a first chirp having a first frequency range, and a second chirp having a second frequency range, higher than the first frequency range;
and wherein the first and second chirps overlap in time for greater than 50% of the duration of the first chirp;
wherein the at least one wideband acoustic transducer is configured to receive a wideband acoustic signal to obtain a wideband acoustic data set;
the system comprises a computer configured to compare the wideband acoustic data set with a database of wideband acoustic data signatures;
wherein the body is configured to be disposed internally of the fluid conduit;
and the at least one wideband acoustic transducer is configured to transmit a wideband acoustic signal comprising frequencies in the range of 10 kHz to 150 kHz.

9. The system (10) according to claim 8, wherein the wideband acoustic signal comprises a lower frequency of 10 kHz, and an upper frequency of 150 kHz, and distribution of frequencies between the upper and lower frequencies.

10. The system (10) according to claim 8 or claim 9 wherein the apparatus (10) comprises a pipeline pig.

11. The system (10) according to any of claims 8 to 10, configured to transmit a wideband acoustic signal from the measurement apparatus, through a fluid which couples the measurement apparatus to at least a portion of the fluid conduit (20), wherein the apparatus comprises arms (16) configured to contact the fluid conduit such that the at least one wideband acoustic transducer does not directly physically contact the fluid conduit.

12. The system (10) according to any of claims 8 to 11, comprising a plurality of pairs of transmitting/receiving wideband acoustic transducers (14).

13. The system (10) according to any of claims 8 to 12, wherein the wideband acoustic transducer (14) has a Q-factor of less than 2.0.

14. The system (10) according to any of claims 8 to 13, wherein the wideband acoustic transducer (14) is selected to provide a substantially linear or linear acoustic response.

## Patentansprüche

1. Ein Verfahren zur Bewertung eines Zustands einer Fluidleitung (20), wobei das Verfahren Folgendes umfasst:
Bereitstellung einer Messvorrichtung (10), die mindestens einen akustischen Breitbandwandler (14) innerhalb der Fluidleitung (20) umfasst;
Übertragung eines akustischen Breitbandsignals, das eine Vielzahl gestapelter Frequenz-Chirps umfasst, von der Messvorrichtung (10), um zumindest einen Teil der Fluidleitung (20) anzuregen; wobei das akustische Breitbandsignal einen ersten Chirp mit einem ersten Frequenzbereich und einen zweiten Chirp mit einem zweiten Frequenzbereich, der höher als der erste Frequenzbereich ist, umfasst,
und wobei sich der erste und der zweite Chirp zeitlich für mehr als 50 % der Dauer des ersten Chirps überlappen;
Empfang eines akustischen Breitbandsignals in der Messvorrichtung (10), um einen Breitband-Akustikdatensatz zu erhalten, und
Analyse des Breitband-Akustikdatensatzes durch Vergleich des Breitband-Akustikdatensatzes mit einer Datenbank von Breitband-Akustikdatensignaturen, um den Zustand der Fluidleitung (20) zu beurteilen;
wobei das akustische Breitbandsignal Frequenzen im Bereich von 10 kHz bis 150 kHz umfasst.

2. Das Verfahren nach Anspruch 1, wobei das akustische Breitbandsignal eine untere Frequenz von 10 kHz und eine obere Frequenz von 150 kHz und eine Frequenzverteilung zwischen der oberen und der unteren Frequenz umfasst.

3. Das Verfahren nach Anspruch 1 oder Anspruch 2, das die Erkennung oder Bewertung einer Schicht oder Ablagerung (18) auf einem Inneren der Fluidleitung umfasst.

4. Das Verfahren nach einem der vorhergehenden Ansprüche, wobei die Messvorrichtung (10) einen Molch umfasst.

5. Das Verfahren nach einem der vorhergehenden Ansprüche, wobei die Fluidleitung eine unterirdische Rohrleitung ist.

6. Das Verfahren nach einem der vorhergehenden Ansprüche, wobei das Verfahren die Übertragung eines akustischen Breitbandsignals von der Messvorrichtung (10) durch ein Fluid umfasst, das die Messvorrichtung mit mindestens einem Abschnitt der Fluidleitung (20) koppelt, wobei mindestens ein akustischer Breitbandwandler (14) keinen direkten physischen Kontakt mit der Fluidleitung hat.

7. Das Verfahren nach einem der vorhergehenden Ansprüche, das die Analyse des Breitband-Akustikdatensatzes durch die Analyse des Frequenzinhalts des Breitband-Akustikdatensatzes und den Vergleich des Datensatzes mit einer Datenbank von Breitband-Akustikdatensignaturen umfasst.

8. Ein Messsystem (10) zur Bewertung eines Zustands einer Fluidleitung (20), wobei das System Folgendes umfasst:
einen Körper (12) und mindestens einen akustischen Breitbandwandler (14), der auf dem Körper angeordnet ist;
wobei der mindestens eine akustische Breitbandwandler so konfiguriert ist, dass er:
ein akustisches Breitbandsignal, das eine Vielzahl gestapelter Frequenz-Chirps umfasst, in ein Fluidvolumen überträgt, das mit dem mindestens einen Abschnitt der Fluidleitung gekoppelt ist, um mindestens einen Abschnitt der Fluidleitung anzuregen; wobei das akustische Breitbandsignal einen ersten Chirp mit einem ersten Frequenzbereich und einen zweiten Chirp mit einem zweiten Frequenzbereich, der höher als der erste Frequenzbereich ist, umfasst;
und wobei sich der erste und der zweite Chirp zeitlich für mehr als 50 % der Dauer des ersten Chirps überlappen;
wobei der mindestens eine akustische Breitbandwandler so konfiguriert ist, dass er ein akustisches Breitbandsignal empfängt, um einen Breitband-Akustikdatensatz zu erhalten;
das System einen Computer umfasst, der so konfiguriert ist, dass er den Breitband-Akustikdatensatz mit einer Datenbank von Breitband-Akustikdatensignaturen vergleicht;
wobei der Körper so konfiguriert ist, dass er innerhalb der Fluidleitung angeordnet ist,
und der mindestens eine akustische Breitbandwandler so konfiguriert ist, dass er ein akustisches Breitbandsignal überträgt, das Frequenzen im Bereich von 10 kHz bis 150 kHz umfasst.

9. Das System (10) nach Anspruch 8, wobei das akustische Breitbandsignal eine untere Frequenz von 10 kHz und eine obere Frequenz von 150 kHz und eine Frequenzverteilung zwischen der oberen und der unteren Frequenz umfasst.

10. Das System (10) nach Anspruch 8 oder Anspruch 9, wobei die Vorrichtung (10) einen Molch umfasst.

11. Das System (10) nach einem der Ansprüche 8 bis 10, das so konfiguriert ist, dass es ein akustisches Breitbandsignal von der Messvorrichtung durch ein Fluid überträgt, das die Messvorrichtung mit mindestens einem Abschnitt der Fluidleitung (20) koppelt, wobei die Vorrichtung Arme (16) umfasst, die so konfiguriert sind, dass sie Kontakt zur Fluidleitung haben, so dass der mindestens eine akustische Breitbandwandler keinen direkten physischen Kontakt mit der Fluidleitung hat.

12. Das System (10) nach einem der Ansprüche 8 bis 11, das eine Vielzahl von Paaren von sendenden/empfangenden akustischen Breitbandwandlern (14) umfasst.

13. Das System (10) nach einem der Ansprüche 8 bis 12, wobei der akustische Breitbandwandler (14) einen Q-Faktor von weniger als 2,0 hat.

14. Das System (10) nach einem der Ansprüche 8 bis 13, wobei der akustische Breitbandwandler (14) so ausgewählt ist, dass er eine im Wesentlichen lineare oder lineare akustische Reaktion bereitstellt.

## Revendications

1. Procédé d'évaluation de l'état d'une conduite de fluide (20), le procédé comprenant :
la fourniture d'un appareil de mesure (10) consistant en au moins un transducteur acoustique à large bande (14) situé à l'intérieur de la conduite de fluide (20) ;
la transmission d'un signal acoustique à large bande consistant en une pluralité de signaux chirp empilés depuis l'appareil de mesure (10) afin d'exciter au moins une partie de la conduite de fluide (20) ; où le signal acoustique à large bande consiste en un premier chirp ayant une première plage de fréquences et en un second chirp ayant une seconde plage de fréquences, supérieure à la première plage de fréquences ;
et où les premier et second chirps se chevauchent dans le temps pendant plus de 50 % de la durée du premier chirp ;
la réception d'un signal acoustique à large bande dans l'appareil de mesure (10) afin d'obtenir un ensemble de données acoustiques à large bande ; et
l'analyse de l'ensemble de données acoustiques à large bande en comparant l'ensemble de données acoustiques à large bande à une base de données de signatures de données acoustiques à large bande afin d'évaluer l'état de la conduite de fluide (20) ;
dans lequel le signal acoustique à large bande consiste en des fréquences comprises dans la plage allant de 10 kHz à 150 kHz.

2. Procédé selon la revendication 1, dans lequel le signal acoustique à large bande consiste en une fréquence basse de 10 kHz, en une fréquence haute de 150 kHz et en des fréquences réparties entre les fréquences haute et basse.

3. Procédé selon la revendication 1 ou la revendication 2, consistant à détecter et à évaluer une couche ou un dépôt (18) d'une partie intérieure de la conduite de fluide.

4. Procédé selon l'une quelconque des revendications précédentes, dans lequel l'appareil de mesure (10) comprend un racleur de conduite.

5. Procédé selon l'une quelconque des revendications précédentes, dans lequel la conduite de fluide est une conduite souterraine.

6. Procédé selon l'une quelconque des revendications précédentes, dans lequel le procédé consiste à transmettre un signal acoustique à large bande depuis l'appareil de mesure (10), à travers un fluide qui relie l'appareil de mesure à au moins une partie de la conduite de fluide (20), où au moins un transducteur acoustique à large bande (14) ne touche pas directement la conduite de fluide.

7. Procédé selon l'une quelconque des revendications précédentes, consistant à analyser l'ensemble de données acoustiques à large bande en analysant le contenu fréquentiel de l'ensemble de données acoustiques à large bande puis en comparant l'ensemble de données à une base de données de signatures de données acoustiques à large bande.

8. Système de mesure (10) pour évaluer l'état d'une conduite de fluide (20), le système comprenant :
un corps (12) et au moins un transducteur acoustique à large bande (14) installé sur le corps ;
dans lequel le au moins un transducteur acoustique à large bande est configuré pour :
transmettre un signal acoustique à large bande, consistant en une pluralité de signaux chirp empilés, dans un volume de fluide relié à la au moins une partie de la conduite de fluide afin d'exciter au moins une partie de la conduite de fluide ; où le signal acoustique à large bande consiste en un premier chirp ayant une première plage de fréquences et en un second chirp ayant une seconde plage de fréquences,
supérieure à la première plage de fréquences ;
et où les premier et second chirps se chevauchent dans le temps pendant plus de 50 % de la durée du premier chirp ;
dans lequel le au moins un transducteur acoustique à large bande est configuré pour recevoir un signal acoustique à large bande afin d'obtenir un ensemble de données acoustiques à large bande ;
le système comprend un ordinateur configuré pour comparer l'ensemble de données acoustiques à large bande à une base de données de signatures de données acoustiques à large bande ;
dans lequel le corps est configuré pour être installé à l'intérieur de la conduite de fluide ;
et le au moins un transducteur acoustique à large bande est configuré pour transmettre un signal acoustique à large bande consistant en des fréquences comprises dans la plage allant de 10 kHz à 150 kHz.

9. Système (10) selon la revendication 8, dans lequel le signal acoustique à large bande consiste en une fréquence basse de 10 kHz, en une fréquence haute de 150 kHz et en une plage de fréquences réparties entre les fréquences haute et basse.

10. Système (10) selon la revendication 8 ou à la revendication 9, dans lequel l'appareil (10) comprend un racleur de conduite.

11. Système (10) selon l'une quelconque des revendications 8 à 10, configuré pour transmettre un signal acoustique à large bande depuis l'appareil de mesure, à travers un fluide qui relie l'appareil de mesure à au moins une partie de la conduite de fluide (20), dans lequel l'appareil comprend des bras (16) configurés pour toucher la conduite de fluide de telle sorte que le au moins un transducteur acoustique à large bande ne touche pas directement la conduite de fluide.

12. Système (10) selon l'une quelconque des revendications 8 à 11, comprenant une pluralité de paires de transducteurs émetteurs/récepteurs acoustiques à large bande (14).

13. Système (10) selon l'une quelconque des revendications 8 à 12, dans lequel le transducteur acoustique à large bande (14) possède un facteur de surtension inférieur à 2,0.

14. Système (10) selon l'une quelconque des revendications 8 à 13, dans lequel le transducteur acoustique à large bande (14) est choisi de manière à fournir une réponse acoustique sensiblement linéaire ou linéaire.
